# EUROPEAN PATENT APPLICATION

(11) **EP 4 803 318 A1**
(43) Date of publication of application: **09.09.2026**
(21) Application number: 26150351.0
(22) Date of filing: 06.01.2026
(51) Int. Cl.: B41J 11/04, B41J 11/70, B41J 2/32, B41J 3/407

(54) **PRINTER, STORAGE MEDIUM, AND PRINTER CONTROL METHOD**

(30) Priority: 03.03.2025 JP 2025033188
(71) Applicant: ETRIA Co., Ltd., Yokohama Kanagawa (JP)
(72) Inventor: TAMURA, Toshiyuki, Yokohama (JP)
(74) Representative: J A Kemp LLP

(57) **Abstract**

According to embodiments, a printer includes a print head, a platen, and a processor. The print head performs printing on a paper conveyed on a conveyance path. The platen rotates with the paper held between the platen and the print head at a print position by the print head. The processor rotates the platen in a case where an elapsed time after the rotation of the platen is stopped exceeds a predetermined time.

## Description

### FIELD

Embodiments described herein relate generally to a printer, a storage medium, and a printer control method.

### BACKGROUND

Conventionally, a label printer as an example of a printer (image forming apparatus) placed in a workplace includes a thermal printer. The thermal printer includes a thermal head (print head) in which a plurality of heat generating elements are arranged in a print line. A thermal printer performs printing by pressing a thermal head against a print medium on a platen. In such a thermal printer, when a recess exists on a surface of the platen, a pressure applied from the thermal head to the print medium becomes non-uniform. For this reason, the thermal printer has a problem that a defect such as blurring of printing may occur at a position corresponding to the recess of the platen.

### SUMMARY

### TECHNICAL PROBLEM

An object of the present invention is to provide a printer that can maintain print quality.

### SOLUTION TO PROBLEM

According to embodiments, a printer includes a print head, a platen, and a processor. The print head performs printing on a paper conveyed on a conveyance path. The platen rotates with the paper held between the platen and the print head at a print position by the print head. The processor rotates the platen in a case where an elapsed time after the rotation of the platen is stopped exceeds a predetermined time.

### BRIEF DESCRIPTION OF DRAWINGS

FIG. 1 is a schematic diagram illustrating a configuration example of a label printer as a printer according to an embodiment.
FIG. 2 is a block diagram illustrating a configuration example of a control system in the label printer as the printer according to the embodiment.
FIG. 3 is a diagram illustrating a configuration example of a platen roller in the label printer as the printer according to the embodiment.
FIG. 4 is a diagram illustrating an example of a printing result in a case where a recess occurs on a surface of a platen roller in the label printer as the printer according to the embodiment.
FIG. 5 is a flowchart illustrating a flow of an operation including protective rotation control of the platen roller in the label printer as the printer according to the embodiment.
FIG. 6 is a flowchart illustrating a flow of a first operation example of the protective rotation control of the platen roller in the label printer as the printer according to the embodiment.
FIG. 7 is a flowchart illustrating a flow of a second operation example of the protective rotation control of the platen roller in the label printer as the printer according to the embodiment.

### DETAILED DESCRIPTION

Hereinafter, a label printer as a printer (image forming apparatus) according to an embodiment will be described with reference to the drawings. However, in the drawings used in the following description of each embodiment, a scale of each part may be appropriately changed. In addition, in the drawings used for description of the following embodiments, configurations may be omitted for easy understanding of description.

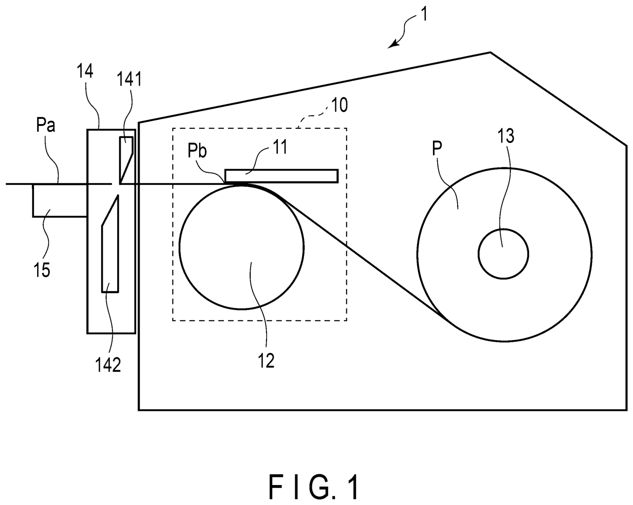

First, a configuration of a label printer 1 as a printer according to the embodiment will be described. FIG. 1 is a schematic diagram schematically illustrating a configuration example of a label printer 1 as a printer according to an embodiment.

The label printer 1, which is an example of the printer according to the embodiment, is placed on a work place. For example, the label printer 1 generates a label Pa that can be attached to an object such as a product in a store such as a supermarket. The label printer 1 includes a printing unit 10, a conveyance roller 13, a cutter unit 14, a tray 15, and the like. The printing unit 10 includes a thermal head 11 and a platen roller (platen) 12, and prints an image on the print medium P. The conveyance roller 13 configures a conveyance unit that conveys the print medium P. The cutter unit 14 includes a cutter 141 and a cutter 142, and cuts the print medium P at a predetermined length.

In the configuration example illustrated in FIG. 1, the printing unit 10 prints an image while holding the print medium P drawn out from the roll-shaped print medium P set on the conveyance roller 13 between the thermal head 11 and the platen roller 12. The roll-shaped print medium P is set on the conveyance roller 13. The print medium P drawn out from the conveyance roller 13 is conveyed to the tray 15 via the printing unit 10 and the cutter unit 14. The cutter unit 14 cuts the print medium P subjected to print processing by the printing unit 10 at a predetermined length. The tray 15 holds (places) the print medium P cut at the predetermined length after an image is printed as a label generated by the label printer 1.

In the embodiment, the label printer 1 uses a linerless label paper (hereinafter, linerless paper and label paper) P as a medium (print medium) for printing an image. The linerless paper P is a label paper without a mount (liner). The linerless paper P has a printing surface formed of thermal paper or the like, and a back surface of the printing surface serves as an attachment surface. The attachment surface of the linerless paper P has an adhesive material. The printing surface of the linerless paper P is formed of thermal paper. The linerless paper P is drawn by a predetermined length at the time of printing by the printing unit 10, and is cut to a predetermined length by the cutter unit 14 after printing. Hereinafter, in the example illustrated in FIG. 1, the linerless paper P before being cut by the cutter unit 14 is referred to as a label paper Pb, and the linerless paper P after being cut by the cutter unit 14 is referred to as a label Pa.

In the printing unit 10, the thermal head 11 and the platen roller 12 face each other via a paper conveyance path through which the label paper Pb is conveyed. The thermal head 11 and the platen roller 12 hold the label paper Pb, therebetween and convey the held label paper Pb by the rotation of the platen roller 12. In the printing unit 10, a sensor or the like that detects the presence or absence of the label paper (label paper at a printing position by the thermal head 11) Pb held between the thermal head 11 and the platen roller 12 is also disposed.

The thermal head prints (prints) an image on a printing surface of the label paper Pb held between the thermal head 11 and the platen roller 12. The thermal head 11 includes a plurality of heating elements arranged in a main scanning direction that is a direction orthogonal to the conveyance direction of the label paper Pb. Heat generation of each heating element of the thermal head 11 is controlled according to an image to be printed to print the image on the printing surface of the label paper Pb held between the heating element and the platen roller 12. For example, the thermal head 11 prints an image indicating information on a product on a printing surface (thermal paper) of the label paper Pb. The information regarding the product is, for example, a bar code or discount information, but is not limited thereto.

Note that the label printer 1 may be configured such that the thermal head 11 and the platen roller 12 convey an ink ribbon and a print medium while holding the ink ribbon and the print medium in an overlapping state between the thermal head 11 and the platen roller 12. In this case, in the label printer 1, even if the printing surface of the print medium P is not a thermal paper, the thermal head 11 can print an image on the printing surface with the ink ribbon.

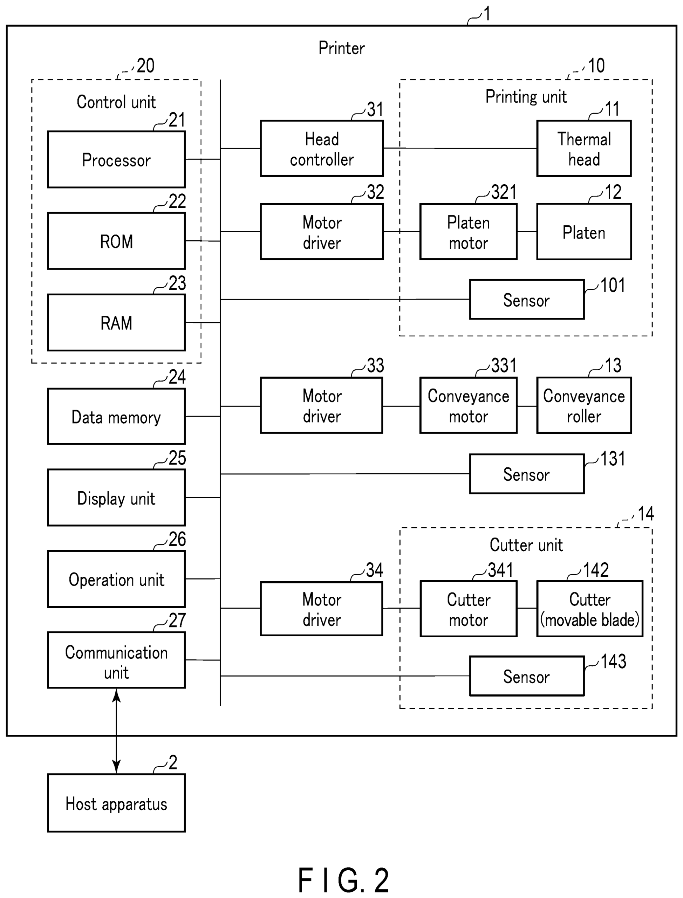

The platen roller 12 rotates by transmission of a driving force of a platen motor 321 (see FIG. 2) to be described later. The platen roller 12 rotates to convey the label paper Pb held between the platen roller 12 and the thermal head 11 toward the tray 15. The platen roller 12 has a structure (non-adhesive processing) in which the label paper Pb hardly adheres to the surface. As the non-adhesive processing on the surface of the platen roller 12, a groove for reducing a contact area with an adhesive surface (back surface of the printing surface) of the label paper Pb is provided, or the surface is impregnated with silicon oil.

The conveyance roller 13 rotatably holds the roll around which the linerless paper P before printing is wound. The conveyance roller 13 is disposed on an upstream side in the conveyance direction of the label paper Pb to be conveyed to the printing unit 10. In addition, a sensor for detecting the presence or absence of the roll-shaped linerless paper P set on the conveyance roller 13, a sensor for detecting that the label paper Pb is pulled out from the roll-shaped linerless paper P, and the like are also disposed in the vicinity of the conveyance roller 13.

The tray 15 is disposed on a downstream side in the conveyance direction in which the linerless paper P is conveyed. The tray 15 holds the label Pa cut to a predetermined length by the cutter unit 14 after printing by the printing unit 10. The tray 15 is subjected to non-adhesive processing so that the adhesive surface of the label Pa does not adhere thereto. In the vicinity of the tray 15, a sensor or the like that detects the label Pa held on the tray 15 is also disposed. Hereinafter, a path along which the linerless paper P is conveyed from the conveyance roller 13 to the tray 15 is referred to as a paper conveyance path.

The cutter unit 14 is provided on the upstream side of the tray 15 and on the downstream side of the platen roller 12 (printing position by the thermal head 11) in the conveyance direction. The cutter unit 14 includes a cutter 141 and a cutter 142. The cutter unit 14 cuts the label paper after printing at every predetermined length under the control of a controller to be described later. A cutting length of the label paper is variable depending on, for example, information to be printed. The cutter unit 14 also includes a sensor for detecting the positions of the cutters 141 and 142, a sensor for detecting the presence or absence of the label paper Pb at the cutting position, and the like.

In the configuration example illustrated in FIG. 1, the cutter 141 is disposed above the paper conveyance path. The cutter 142 is disposed below the paper conveyance path. In the present embodiment, the cutter 141 is a fixed blade whose position is fixed, and the cutter 142 is a movable blade movable in a vertical direction. The cutter (hereinafter, also referred to as a movable blade)142 is disposed (stands by) at a storage position below the paper conveyance path, and moves upward in a case of cutting the storage label paper. When movable blade 142 moves upward, a blade of the cutter (hereinafter, also referred to as a fixed blade) 141, which is a fixed blade, and a blade of the movable blade 142 cut the label paper Pb at the predetermined cutting position.

Next, a configuration of a control system in the label printer 1 as a printer according to the embodiment will be described.

FIG. 2 is a block diagram illustrating a configuration example of a control system in the label printer 1 as a printer according to the embodiment.

In the configuration example illustrated in FIG. 2, the label printer 1 includes a processor 21, a read only memory (ROM) 22, a random access memory (RAM) 23, a data memory 24, a display unit 25, an operation unit 26, a communication unit 27, a head controller 31, a motor driver 32, a motor driver 33, a motor driver 34, and the like.

In the label printer 1, a printing control system that controls a printing unit 10 includes a control unit 20, a head controller 31, a motor driver 32, a printing unit 10, and the like. The head controller 31 is connected to the control unit 20 via a bus line or the like, and is connected to a thermal head 11 in a printing unit 10. The motor driver 32 is connected to the control unit 20 via a bus line or the like, and is connected to a platen motor 321 in the printing unit 10. Furthermore, various sensors 101 in the printing unit 10 are connected to the processor 21 and the like in the control unit 20.

In the label printer 1, a conveyance control system that controls conveyance of the linerless paper P includes a control unit 20, a motor driver 33, a conveyance motor 331, a conveyance roller 13, a sensor 131 provided on a conveyance path, and the like. This includes a motor driver 32, a printing unit 10, and the like. The motor driver 33 is connected to the control unit 20 via a bus line or the like, and is connected to a conveyance motor 331 that drives the conveyance roller 13. The sensor 131 provided on the conveyance path or the like is connected to the processor 21 or the like in the control unit 20. In the label printer 1, a cutter control system that controls the cutter unit 14 includes the motor driver 34, the cutter unit 14, and the like. The motor driver 34 is connected to the control unit 20 via a bus line or the like, and is connected to a cutter motor 341 that drives the cutter 142 as a movable blade. A sensor 143 provided in the cutter unit 14 is connected to the processor 21 or the like in the control unit 20.

The processor 21, the ROM 22, and the RAM 23 configure a control unit (controller) 20 that performs a main control. The control unit 20 is connected to the data memory 24, the display unit 25, the operation unit 26, the communication unit 27, the head controller 31, the motor driver 32, the motor driver 33, the motor driver 34, the sensor groups 101, 131, 143, and the like via a bus line. The bus line includes an address bus, a data bus, a control signal line, and the like.

The processor 21 is connected to each unit directly or via a signal input/output circuit via a bus line, and is configured to transmit a data signal exchanged between the units. The processor 21 is a hardware processor for comprehensively controlling the label printer 1. The processor 21 controls each unit in the label printer 1 according to an operating system or a control program.

The processor 21 is, for example, a central processing unit (CPU). The processor 21 may include a micro processing unit (MPU), a system on a chip (SoC), a digital signal processor (DSP), a graphics processing unit (GPU), an application specific integrated circuit (ASIC), a programmable logic device (PLD), a field-programmable gate array (FPGA), or the like.

The ROM 22 is a nonvolatile memory. The ROM 22 stores programs to be executed by the processor 21 and various data.

The RAM 23 is a volatile memory. The RAM 23 is a memory that temporarily holds data. For example, the RAM 23 operates as a memory for expansion that temporarily stores programs and data in a case where the processor 21 executes programs.

The data memory 24 corresponds to an auxiliary storage portion. The data memory 24 is a rewritable nonvolatile memory. The data memory 24 includes, for example, an electric erasable Programmable read-only memory (EEPROM), a hard disc drive (HDD), a solid state drive (SSD), or the like. The data memory 24 stores data used when the processor 21 performs various types of processing, data created by processing in the processor 21, and the like.

The display unit 25 includes a display device that displays information. The display unit 25 is provided at a position where a display screen can be visually recognized by an operator of the label printer 1 in a housing forming the label printer 1. The display unit 25 displays operation guidance of the label printer 1, information indicating a state of the label printer 1, or the like.

The operation unit 26 includes an input device for an operator to input an operation instruction. The input device as the operation unit 26 is, for example, various input buttons, a touch panel, or the like. The operation unit 26 is provided in a housing or the like forming the label printer 1. For example, the display unit 25 and the operation unit 26 may be configured by a display device with a touch panel.

The communication unit 27 is a communication interface for communicating with a host computer, a user terminal, or the like provided outside. For example, the communication unit 27 is communicably connected to the host apparatus (host computer) 2, and receives print data for label printing, a print command, and the like supplied from the host apparatus 2.

The head controller 31 is connected to the thermal head 11. The head controller 31 drives the thermal head 11. The head controller 31 includes a drive circuit that drives (generates heat) each heating element in the thermal head 11. The head controller 31 controls a heating state of each heating element in the thermal head 11. The head controller 31 causes each heating element of the thermal head 11 to generate heat based on a print image to be printed on the label paper Pb.

The motor driver 32 is connected to the platen motor 321. The platen motor 321 conveys the label paper Pb held between the thermal head 11 and the platen roller 12 by rotating the platen roller 12. For example, the motor driver 32 drives the platen motor 321 according to a conveyance speed (printing speed) of the label paper Pb designated by the processor 21 during the print processing.

The motor driver 32 rotates the platen roller 12 by rotating the platen motor 321 by a predetermined amount in a rotation direction (forward rotation direction or reverse rotation direction) designated by the processor 21. Here, a direction in which the label paper Pb is conveyed from the printing position to the tray 15 is defined as a forward direction, and a conveyance direction in which the label paper Pb is conveyed from the printing position to the conveyance roller 13 is defined as a reverse direction. The rotation direction of the platen roller 12 that conveys the label paper Pb in the forward direction is defined as forward rotation, and the rotation direction of the platen roller 12 that conveys the label paper Pb in the reverse direction is defined as reverse rotation. That is, the motor driver 32 rotates the platen roller 12 forward or backward by the platen motor 321 according to the designation from the processor 21.

The sensor 101 provided in the printing unit 10 outputs a detection signal to the processor 21. For example, the sensor 101 provided at the printing position outputs a detection signal indicating the presence or absence of the label paper Pb at the printing position to the processor 21. The processor 21 monitors the presence or absence of the label paper Pb at the printing position by the detection signal of the sensor 101.

The motor driver 33 is connected to the conveyance motor 331. The conveyance motor 331 rotates the conveyance roller 13. The motor driver 33 drives the conveyance motor 331 in accordance with an instruction from the processor 21 to wind up or send out the label paper Pb on the roll of the linerless paper P. Further, the motor driver 33 may drive the conveyance motor 331 in such a way that the paper conveyance by the platen roller 12 and the paper conveyance by the conveyance roller 13 are interlocked. For example, the motor driver 33 may drive the conveyance motor 331 in conjunction with driving of the platen motor 321 by the motor driver 32.

The sensor 131 that detects the conveyance state of the label paper Pb outputs a detection signal to the processor 21. For example, a sensor 131 that detects the presence or absence of the label paper Pb is provided at a predetermined position on the paper conveyance path. The processor 21 monitors a conveyance state of the label paper Pb and a set state of the label paper Pb by a detection signal of the sensor 131 provided in the paper conveyance path.

The motor driver 34 is connected to the cutter motor 341. The cutter motor 341 moves the movable blade 142 in a predetermined direction via a cam or the like. In the example illustrated in FIG. 1, the cutter motor 341 moves the cutter 142, which is a movable blade, from a standby position upward or from an upper position to the standby position. That is, the cutter motor 341 moves the movable blade 142 at a predetermined standby position (cutter home position) to the cutting position in accordance with an instruction from the processor 21 to cut the label paper Pb at a predetermined cutting position. In the example illustrated in FIG. 1, the cutter motor 341 moves the cutter 142, which is a movable blade, upward to cut the label paper Pb at the cutting position on the paper conveyance path. The motor driver 34 causes the cutter motor 341 to operate the cutter 142 at the timing instructed by the processor 21 to cut the label paper Pb, thereby generating the label Pa.

The sensor 143 provided in the cutter unit 14 outputs a detection signal to the processor 21. For example, the cutter unit 14 is provided with one or a plurality of sensors 143 that detect the position of the movable blade 142. The sensor 143 outputs a detection signal indicating a position of the movable blade 142 to the processor 21. The processor 21 monitors the position of the movable blade 142 in accordance with a detection signal from the sensor 143. As a specific example, the sensor 143 is a position sensor that outputs a detection signal indicating whether the movable blade 142 is at a standby position that is a lowest point. In this case, the processor 21 monitors whether the movable blade 142 is at the standby position by the detection signal of the sensor 143.

Next, the platen roller 12 in the label printer 1 as a printer according to the embodiment will be described.

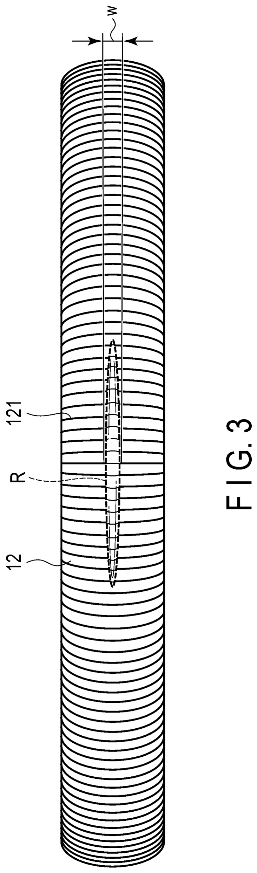

FIG. 3 is a diagram illustrating a configuration example of the platen roller 12 in the label printer 1 as a printer according to the embodiment.

In the present embodiment, the label printer 1 uses linerless paper as a print medium. Therefore, in the label printer 1, the linerless paper P is held between the thermal head 11 and the platen roller 12. In the linerless paper P, the printing surface is in contact with the thermal head 11, and the adhesive surface is in contact with the surface of the platen roller 12. Therefore, the surface of the platen roller 12 is subjected to non-adhesive processing in such a way that the adhesive surface of the linerless paper P does not adhere thereto.

In the configuration example illustrated in FIG. 3, the platen roller 12 is provided with a plurality of grooves 121 on the surface. The plurality of grooves 121 is provided in the circumferential direction of the platen roller 12 at predetermined intervals in a direction orthogonal to the rotation direction of the platen roller 12. The platen roller 12 can reduce a contact area with the adhesive surface of the linerless paper P by the grooves 121 provided on the surface. As a result, the platen roller 12 has a structure in which the adhesive of the adhesive surface of the linerless paper P hardly adheres to the surface thereof, and is configured to stably convey the linerless paper P. Further, the surface of the platen roller 12 may be impregnated with silicon oil as non-adhesive processing.

The platen roller 12 holds the label paper Pb between the platen roller 12 and the thermal head 11. In order to hold the label paper Pb therebetween, the surface of the platen roller 12 is pressed by the thermal head 11 with a predetermined pressure. The surface of the platen roller 12 is deformed by pressing from the thermal head 11, and returns to a predetermined shape (original shape) when released from the pressing from the thermal head 11. The platen roller 12 maintains a predetermined shape by a transition of a portion to which pressure from the thermal head 11 is applied by rotation.

However, when a specific portion is continuously pressed for a long time, the surface of the platen roller 12 may be difficult to restore to a predetermined shape. That is, when the rotation of the platen roller 12 is stopped and left for a long period of time in a state of being pressed by the thermal head 11, there is a possibility that the surface of the platen roller 12 remains deformed. The characteristics of deformation on the surface of the platen roller 12 vary depending on the configuration of a material, hardness, structure, and the like forming the surface of the platen roller 12.

FIG. 3 illustrates an example of a deformed region (a region that remains deformed without returning to the original shape) R on the surface of the platen roller 12.

The thermal head 11 is configured such that a plurality of heating elements arranged in a direction (main scanning direction) orthogonal to the conveyance direction of the linerless paper P by the platen roller 12 is in contact with the linerless paper P at the printing position. Therefore, on the surface of the platen roller 12, as illustrated in FIG. 3, a recess (deformation) occurs in a region R spreading in a width direction (direction orthogonal to the conveyance direction) of the linerless paper P. In a normal printing operation, the recess (deformation) in the region R returns to the original shape in a case of being released from the pressed state from the thermal head 11.

However, in a case where the region R is continuously pressurized by the thermal head 11 for a long time, the recess (deformation) in the region R may not be restored to an original shape. The time (continuous pressing time from the thermal head 11) during which the surface of the platen roller 12 remains deformed (does not return to the original shape) is set by the material, hardness, structure, and the like of the platen roller 12. Therefore, the time set as the continuous pressing time during which the surface of the platen roller 12 remains deformed is set experimentally, for example.

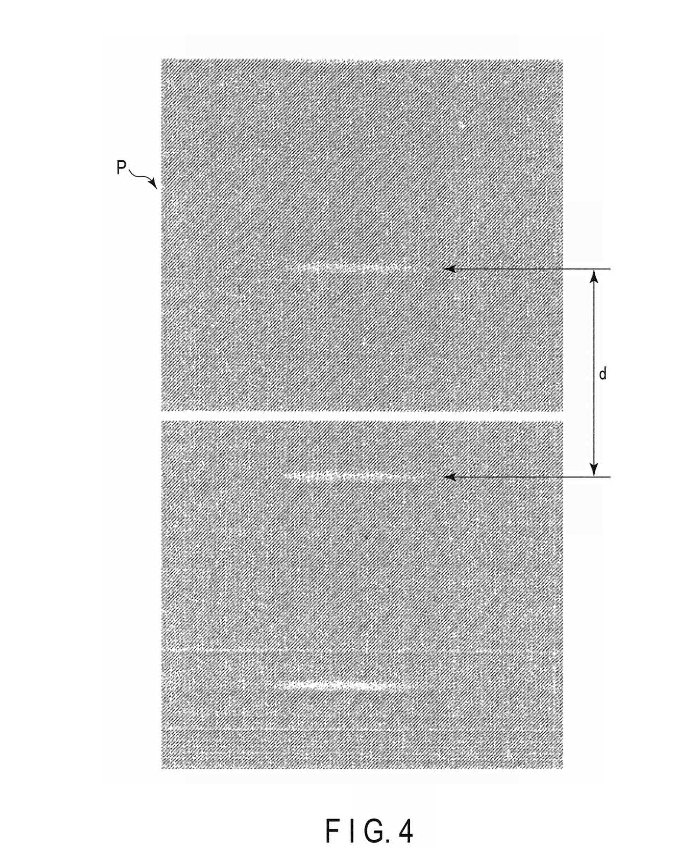

FIG. 4 is a diagram illustrating an example of a printing result in a case where a recess is generated in a region such as the region R illustrated in FIG. 3 on the surface of the platen roller 12.

As illustrated in FIG. 4, in a case where there is a recess in a specific region R of the platen roller 12, blurring (defective image) occurs in a region corresponding to the recess in the printing result on the label paper P. The defect image in the printing result periodically appears according to the region of the recess of the rotating platen roller 12. In the example of the printing result illustrated in FIG. 4, a defective image (for example, white streaks of period d) occurs at an interval d with respect to the conveyance direction of the paper P.

In the example illustrated in FIG. 3, the recessed (deformed) region R on the surface of the platen roller 12 extends in a direction orthogonal to the rotation direction of the platen roller 12 (conveyance direction of the paper P), and has a width w with respect to the rotation direction of the platen roller 12. In order to prevent the deformation of the region R, the platen roller 12 may be rotated in such a way that a peripheral surface of the platen roller 12 moves a distance equal to or longer than the width w until the continuous pressing time in which the region R remains deformed is reached.

The label printer 1 has a function of performing control (protective rotation control) of rotating the platen roller 12 in such a way that pressing from the thermal head 11 to the same place of the platen roller 12 does not continuously take a predetermined time or more. In order to execute protective rotation control for preventing deformation of the platen roller 12, the processor 21 manages the elapsed time from the completion of final rotation (stop) of the platen roller 12 and the final rotation direction of the platen roller 12. In a case where the stop time (elapsed time) of the platen roller 12 becomes equal to or longer than a predetermined time, the processor 21 performs protective rotation control to change the pressurized place from the thermal head 11 by rotating the platen roller 12.

Next, an operation including the protective rotation control of the platen roller 12 in the label printer 1 as a printer according to the embodiment will be described.

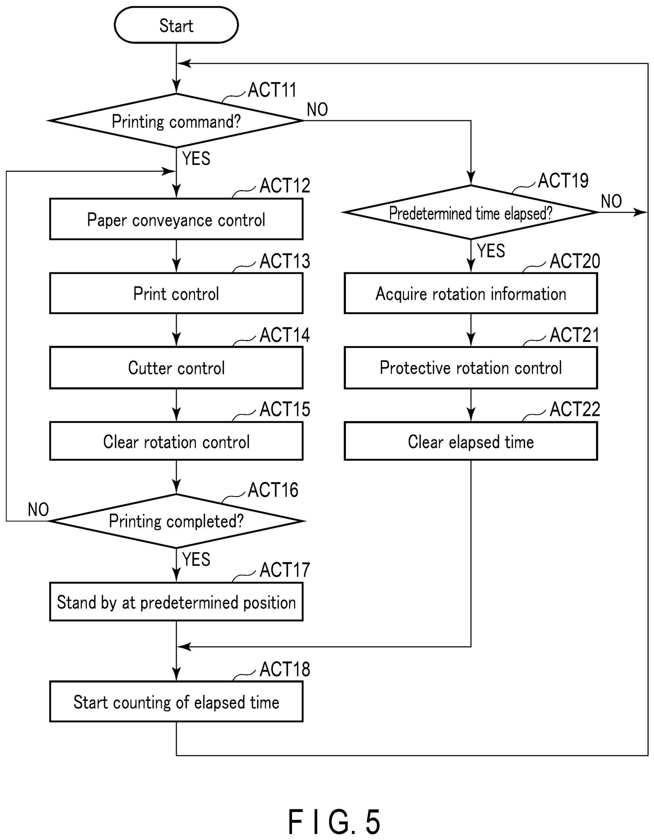

FIG. 5 is a flowchart illustrating a flow of an operation including protective rotation control of the platen roller 12 in the label printer 1 as the printer according to the embodiment.

The processor 21 of the label printer 1 receives a printing command in a state where the printing operation can be executed (ACT11). For example, the processor 21 receives a command for instructing printing from a host apparatus 2 by the communication unit 27. Upon receiving the command for instructing printing from the host apparatus 2 via the communication unit 27, the processor 21 starts execution of print processing based on the command.

When the print processing is started, the processor 21 performs paper conveyance control to convey the label paper Pb as a print medium along the paper conveyance path by controlling the rotation of the conveyance roller 13 and the platen roller 12 (ACT12). For example, the processor 21 detects that the linerless paper P is at a predetermined printing start position by the sensor 101 and the sensor 131. Upon detecting that the label paper Pb is at the printing start position, the processor 21 performs paper conveyance control to convey the label paper Pb at a printing speed (conveyance speed) designated by the command.

In addition, the processor 21 performs printing control of printing print information by the printing unit 10 on the printing surface of the label paper Pb conveyed on the paper conveyance path (ACT13). For example, the processor 21 controls heat generation of each heating element of the thermal head 11 according to a print image for which printing is designated by a command. As a result, the thermal head performs printing on the label paper held between the thermal head 11 and the platen roller 12.

Further, the processor 21 performs cutter control for cutting the label paper Pb on which the print image has been printed at a predetermined length by the cutter unit 14 (ACT14). For example, when the printed label paper Pb reaches a predetermined cutting position, the processor 21 drives the cutter 142, which is a movable blade, to cut the label paper Pb on the paper conveyance path. As a result, one label Pa cut at a predetermined length is placed on the tray 15.

The processor 21 completes one printing command (generation of one label) by completing the cutting of the label paper Pb. When one printing command is completed, the processor 21 clears the rotation information for performing the protective rotation control of the platen roller 12 (ACT15). The rotation information includes, for example, information indicating a rotation direction immediately before the rotation of the platen roller 12 stops, and is information held in the data memory 24 or the RAM 23. For example, it is assumed that the processor 21 clears the rotation information by setting the rotation information to an initial state indicating that the protective rotation control is not performed.

When one printing command is completed, the processor 21 determines whether printing is completed depending on whether there is a next printing command (ACT16). In a case where there is the next printing command (ACT16, NO), the processor 21 returns to ACT12 and executes paper conveyance control, printing control, and cutter control according to the next printing command.

In a case where there is no next printing command (ACT16, NO), the processor 21 completes a series of print processing (label generation processing). When the series of print processing is completed, the processor 21 causes the label paper Pb to stand by at a predetermined standby position (ACT17). The standby position of the label paper Pb after completion of printing can be set according to the specification of the label printer 1. The processor 21 causes the label paper Pb after completion of printing to stand by at a standby position set as a specification of the label printer 1.

For example, the standby position of the label paper Pb after completion of printing may be a position where a leading edge of the label paper Pb becomes a predetermined printing position (printing start position). In this case, after completion of printing (for example, after a predetermined time has elapsed from completion of printing), the processor 21 conveys the label paper Pb such that the leading edge of the label paper Pb is at a predetermined printing position. Accordingly, the processor 21 enters the standby state when the leading edge of the label paper Pb reaches the printing start position.

The standby position of the label paper Pb after completion of printing may be a position where the label paper Pb is finally cut by the cutter unit 14. In this case, when the cutter unit 14 cuts the label paper Pb, the processor 21 may stop the operation of the drive system for conveying the paper to be in the standby state.

When the print processing is completed and the label paper Pb enters a standby state, the processor 21 starts control (deformation protection control) for deformation protection on the platen roller 12. The processor 21 starts counting of an elapsed time after the platen roller 12 stops as the deformation protection control (ACT18). For example, the processor 21 holds the elapsed time to be counted in the RAM 23 or the data memory 24. The processor 21 continues counting of the elapsed time until receiving the next printing command (ACT11, NO). In a case where the platen roller 12 rotates according to an operation command other than the printing command, the processor 21 may reset the elapsed time.

In a case where there is no next printing command, the processor 21 monitors whether the elapsed time has reached a predetermined set time (ACT19). Here, the predetermined set time is a time that is an interval at which the protective rotation control for preventing deformation of the platen roller 12 is performed. The predetermined set time as the execution interval of the protective rotation control is set to be less than a time in which deformation that cannot be restored in the platen roller 12 may occur. The predetermined setting time is set according to the structure, material, and the like of the platen roller 12. For example, in a case where a groove is provided to make the surface of the platen roller 12 non-adhesive, the platen roller 12 is easily deformed by pressing from the thermal head 11. A predetermined setting time is set according to the configuration of the platen roller 12.

In a case where the predetermined set time has elapsed in a state where there is no next printing command (ACT19, YES), the processor 21 acquires rotation information indicating the rotation direction and the like immediately before the platen roller 12 stops (ACT20). Here, the rotation information is information indicating an initial state (a state in which the label paper Pb is at a predetermined standby position) in a case where the protective rotation control is not performed (after completion of printing). In a case where the protective rotation control is performed, the rotation information includes information indicating a direction in which the platen roller 12 is rotated in the previous protective rotation control.

The processor 21 executes protective rotation control for preventing deformation of the platen roller 12 based on the rotation information (ACT21). For example, the processor 21 executes protective rotation control by determining a rotation direction and a rotation amount of the platen roller 12 for preventing deformation of the platen roller 12 based on the rotation information. As the protective rotation control, the platen roller 12 may be rotated such that the label paper Pb is within a predetermined range, and various operation examples can be considered. A specific example of the protective rotation control will be described later.

When the protective rotation control is executed, the processor 21 clears the elapsed time (ACT22) and proceeds to ACT18 to newly start counting the elapsed time. As a result, the processor 21 can perform the protective rotation control for preventing deformation of the platen roller 12 every time the elapsed time reaches the execution interval of the protective rotation control until receiving the next printing command.

Next, a specific operation example of the protective rotation control of the platen roller 12 in the label printer 1 as the printer according to the embodiment will be described.

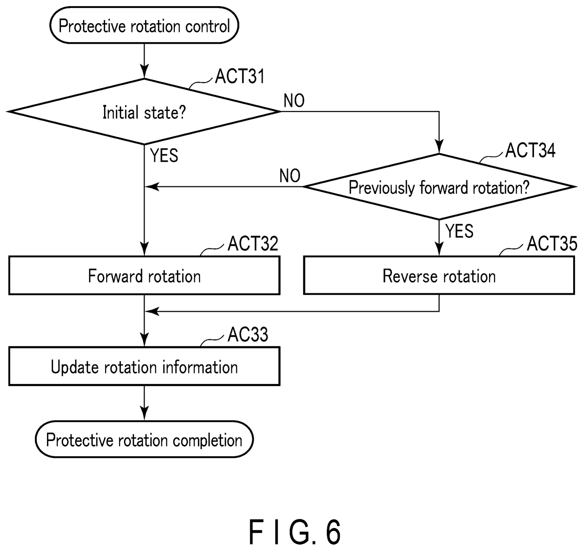

FIG. 6 is a flowchart illustrating a flow of a first operation example of the protective rotation control of the platen roller 12 in the label printer 1 as the printer according to the embodiment.

Here, in order to prevent the adhesive surface of the label paper Pb from adhering to a conveyance path or the like, the label paper Pb is assumed to be in a predetermined range movable from a printing position (printing start position) to a cutting position by the cutter unit 14. The printing position is a position where the thermal head 11 and the platen roller 12 holds the label paper Pb therebetween. In the first operation example, it is assumed that the standby position of the label paper Pb after completion of printing is the printing start position.

First, in a case of acquiring the rotation information and starting the protective rotation control, the processor 21 determines whether it is in an initial state (a state in which the protective rotation control is not performed) (ACT31). For example, in a case where the rotation information is cleared, the processor 21 determines that the label paper Pb is in the initial state at the standby position after completion of printing. In a case where the information indicating the rotation direction of the platen roller 12 in the previous protective rotation control is stored as the rotation information, the processor 21 determines that it is not in the initial state.

In a case of determining that it is in the initial state (ACT31, YES), the processor 21 causes the platen roller 12 to rotate forward by a predetermined amount (ACT32). In the rotation direction of the platen roller 12, a direction in which the label paper Pb is conveyed from the printing start position to the cutting position is referred to as forward rotation, and a direction in which the label paper Pb is conveyed from the cutting position to the printing position is referred to as reverse rotation. That is, the processor 21 rotates the platen roller 12 forward if the protective rotation control is not performed in the initial state.

In addition, the processor 21 sets the rotation amount of the platen roller 12 to a predetermined amount corresponding to a size of a deformation region R generated on the surface of the platen roller 12 by the pressing applied from the thermal head 11 to the platen roller 12. In the example illustrated in FIG. 3, the region R has a width "w" in the rotation direction of the platen roller 12. The rotation amount of the platen roller 12 is set so as to be equal to or larger than the width w of the region R. As a specific example, in a case where the width w of the region R to be deformed is experimentally 3 mm, the rotation amount of the platen roller 12 is set such that a peripheral surface of the platen roller 12 moves by 3 mm or more.

That is, the predetermined amount as the rotation amount for rotating the platen roller 12 is set such that the leading edge of the label paper Pb is equal to or larger than the width w of the deformation region R within a predetermined range. The rotation amount of the platen roller 12 is set such that the position of the label paper Pb moving with the rotation of the platen roller 12 is within a predetermined range (between the printing position and the cutting position). However, the rotation amount of the platen roller 12 may be equal to or larger than the width w of the deformation region R, and the efficiency of the drive control can be improved by setting the label paper Pb to move in the vicinity of the printing position.

In a case of determining that the state is not the initial state (ACT31, NO), the processor 21 determines whether the rotation direction of the platen roller 12 in the immediately preceding protective rotation control is forward rotation (ACT34). For example, the processor 21 specifies the rotation direction of the platen roller 12 in the preceding protective rotation control based on the rotation information, thereby determining whether the immediately preceding rotation direction is the forward rotation.

In a case of determining that the immediately preceding rotation direction of the platen roller 12 is the forward rotation (ACT34, YES), the processor 21 reverses the platen roller 12 by a predetermined amount (ACT35). Here, if the rotation amount of the reverse rotation of the platen roller 12 is made the same as the rotation amount of the forward rotation of the platen roller 12 in the immediately preceding protection rotation control, the label paper Pb returns to the printing position. Accordingly, the position of the label paper Pb that moves in accordance with the protective rotation control of the platen roller 12 can be moved in the vicinity of the printing position. However, from the viewpoint of protecting the platen roller 12, the rotation amount of reversely rotating the platen roller 12 may not be the same as the rotation amount of normally rotating the platen roller 12. For example, the amount of rotation for reversely rotating the platen roller 12 may be equal to or larger than the width w of the deformation region R when the leading edge of the label paper Pb is within a predetermined range.

In addition, in a case of determining that the rotation direction of the platen roller 12 by the immediately preceding protective rotation control is not forward rotation (reverse rotation) (ACT34, NO), the processor 21 proceeds to ACT32 and rotates the platen roller 12 forward by a predetermined amount.

In a case where the platen roller 12 is rotated as the protective rotation control, the processor 21 updates the rotation information including the information indicating the rotation direction in which the platen roller 12 is rotated in the protective rotation control (ACT33). For example, in a case where the platen roller 12 is rotated forward as the protective rotation control, the processor 21 stores rotation information including information indicating that the platen roller 12 is rotated forward. In a case where the platen roller 12 is reversely rotated as the protective rotation control, the processor 21 stores rotation information including information indicating that the platen roller 12 is reversely rotated.

In the first operation example illustrated in FIG. 6 described above, since it is assumed that the standby position of the label paper Pb after completion of printing is the printing start position, the platen roller 12 rotates forward in the first cycle (initial state) protective rotation control. However, the rotation direction of the platen roller 12 is determined (set) according to the standby position of the label paper Pb. For example, if the standby position of the label paper Pb after completion of printing is the cutting position cut by the cutter unit 14, the rotation direction of the platen roller 12 in the first cycle (initial state) protective rotation control may be the reverse rotation direction.

The predetermined range in which the label paper Pb is movable may be a range in which the adhesive surface of the label paper (linerless paper) P does not adhere to a paper conveyance path or the like. For example, in a case where the tray 15 is subjected to the non-adhesive processing and the label Pa does not exist on the tray 15, the predetermined range in which the label paper Pb is movable may be a range in which the leading edge of the label paper Pb is between the printing position and the tray 15.

Next, a second operation example of the protective rotation control of the platen roller 12 in the label printer 1 as the printer according to the embodiment will be described.

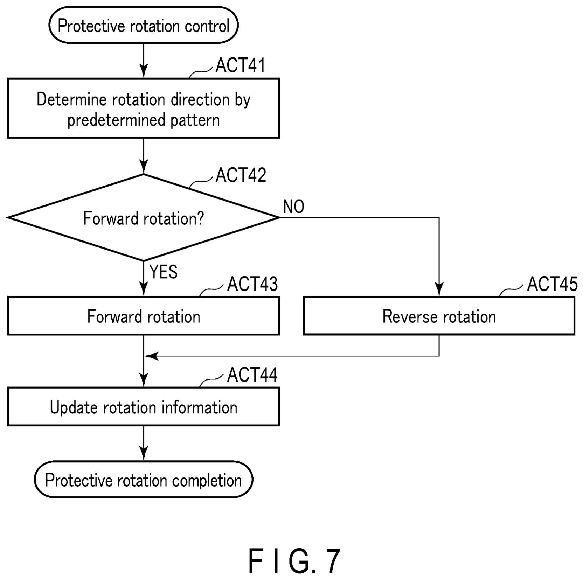

FIG. 7 is a flowchart illustrating a flow of a second operation example of the protective rotation control of the platen roller 12 in the label printer 1 as the printer according to the embodiment.

In the second operation example, the rotation direction of the platen roller in the protective rotation control is not limited to the forward and reverse order. In the first operation example, the rotation direction of the platen roller in the protective rotation control is switched between the forward rotation and the reverse rotation in order, but the rotation direction of the platen roller is not limited to a pattern in which the forward rotation and the reverse rotation are switched in order as long as it is within a predetermined range. In the second operation example, the rotation direction of the platen roller 12 is determined in a predetermined pattern.

First, in a case of acquiring the rotation information and starting the protective rotation control, the processor 21 determines the rotation direction of the platen roller 12 based on a predetermined pattern (ACT41). The predetermined pattern is a pattern in which the rotation direction of the platen roller 12 is set, and is information set in advance and stored as setting information in the data memory 24 or the like. In the predetermined pattern, the forward rotation and the reverse rotation can be set in any order as long as the position of the label paper Pb moving with the rotation of the platen roller 12 is within a predetermined range. For example, the predetermined pattern may include an order in which forward rotation continues or reverse rotation continues, such as forward rotation, forward rotation, reverse rotation, and reverse rotation.

In a case of determining that the rotation direction is the forward rotation (ACT42, YES), the processor 21 causes the platen roller 12 to rotate forward (ACT42). Here, the rotation amount of forward rotation of the platen roller 12 may be a predetermined constant amount, or an arbitrary rotation amount may be set together with a predetermined pattern. For example, as described in the first operation example, the rotation amount of the platen roller 12 may be set as long as it is equal to or larger than the width w of the deformation region R.

In a case of determining that the rotation direction is the reverse rotation (ACT42, NO), the processor 21 reversely rotates the platen roller 12 (ACT45). Here, the rotation amount for reversely rotating the platen roller 12 may be a predetermined constant amount, or an arbitrary rotation amount may be set together with a predetermined pattern. For example, as described in the first operation example, the rotation amount of the platen roller 12 may be set as long as it is equal to or larger than the width w of the deformation region R.

In a case where the platen roller 12 is rotated as the protective rotation control, the processor 21 updates the rotation information including the information indicating the rotation direction in which the platen roller 12 is rotated in the protective rotation control (ACT44). For example, in a case where the platen roller 12 is rotated forward as the protective rotation control, the processor 21 stores rotation information including information indicating that the platen roller 12 is rotated forward. In a case where the platen roller 12 is reversely rotated as the protective rotation control, the processor 21 stores rotation information including information indicating that the platen roller 12 is reversely rotated. However, in the second operation example, in order to determine the rotation direction as the predetermined pattern, not only the rotation direction of the platen roller 12 in the immediately preceding protective rotation control but also the rotation direction (history information on the rotation direction) of the platen roller 12 in the past protective rotation control are stored as the rotation information.

As described above, the printer according to the embodiment performs the protective rotation control of rotating the platen roller in a case where the stop time of the platen roller in the pressurized state from the thermal head exceeds a predetermined time. Since the printer can move the pressurizing place from the thermal head every predetermined time by the protective rotation control, the shape change of the platen can be prevented.

In addition, the printer according to the embodiment can prevent a change in the shape of the platen by the rotation of the platen roller, can control the rotation of the platen roller so that the moving range of the print medium is within a predetermined range, and can prevent the print medium from adhering to a conveyance path or the like even if the print medium is a linerless paper.

Furthermore, the printer according to the embodiment can set the rotation direction and the rotation amount of the platen roller such that the position of the print medium is in the vicinity of the print position. As a result, the printer can perform the protective rotation control of the platen roller in such a way that printing can be smoothly started when receiving a printing command at an arbitrary timing without wasting a print medium such as a linerless paper.

In the above embodiment, the ROM 22 or the data memory 24 of the label printer 1 is a storage medium (storage device) that stores a program for the processor 21 to execute the above-described processing or control. For example, individually transferred programs may be written in the data memory 24, which is a writable storage device included in the label printer 1, according to an operation by an administrator or the like. Furthermore, the program may be stored in a removable non-transitory tangible computer readable storage medium and transferred, or may be transferred by communication via a network. A non-transitory tangible computer readable storage medium may be any medium as long as it can store program data and can be read by a device, such as an optical disk or a memory card.

While certain embodiments have been described, these embodiments have been presented by way of example only, and are not intended to limit the scope of invention. Indeed, the novel apparatus and methods described herein may be embodied in a variety of other forms; furthermore, various omissions, substitutions and changes in the form of the apparatus and methods described herein may be made without departing from the spirit of the inventions. The accompanying claims and their equivalents are intended to cover such forms or modifications as would fall within the scope and spirit of the inventions.

## Claims

1. A printer comprising:
a print head that performs printing on a paper conveyed on a conveyance path;
a platen that rotates while holding the paper between the platen and the print head at a printing position by the print head; and
a processor that rotates the platen in a case where an elapsed time after the rotation of the platen is stopped exceeds a predetermined time.

2. The printer according to claim 1, wherein
the processor rotates the platen by an amount equal to or larger than a size of a region where a surface of the platen is deformed by pressing from the print head.

3. The printer according to claim 1, wherein
the processor rotates the platen in such a way that a moving distance of the paper from the printing position falls within a predetermined range.

4. The printer according to claim 3, further comprising
a cutter that cuts a paper that has passed through the printing position at a predetermined cutting position, wherein
the predetermined range is a range in which a leading edge of the paper is between the printing position and the cutting position.

5. The printer according to claim 3, further comprising
a memory that stores rotation information indicating a rotation direction immediately before the platen stops,
wherein the processor rotates the platen in a direction opposite to a rotation direction immediately before stop indicated by the rotation information stored in the memory in a case where the elapsed time exceeds the predetermined time.

6. The printer according to claim 3, wherein
the processor determines a rotation direction in which the platen is rotated in a case where the elapsed time exceeds the predetermined time according to a standby position of the paper after completion of printing using the print head.

7. The printer according to claim 3, further comprising
a memory that stores rotation information indicating a rotation direction of the platen immediately before the platen is stopped,
wherein the processor determines the rotation direction of the platen based on the rotation information stored in the memory in such a way that the rotation direction of the platen becomes a predetermined pattern in a case where the elapsed time exceeds the predetermined time.

8. The printer according to claim 1, wherein
the paper is a linerless paper having an adhesive surface.

9. The printer according to claim 1, wherein
the platen has a non-adhesive structure.

10. The printer according to claim 1, wherein
the platen has a groove on a surface thereof.

11. A non-transitory storage medium storing a program causing a processor included in a printer to implement:
rotating a platen that holds a paper between the platen and a print head at a printing position by the print head in a case where the print head prints on the paper conveyed on a conveyance path;
counting an elapsed time after the rotation of the platen is stopped in a case where the rotation of the platen is stopped; and
rotating the platen in a case where the elapsed time exceeds a predetermined time.

12. The non-transitory storage medium according to claim 11, wherein
a rotation amount of rotating the platen in a case where the elapsed time exceeds a predetermined time is equal to or larger than a size of a region where a surface of the platen is deformed by pressing from the print head.

13. The non-transitory storage medium according to claim 11, wherein
a rotation amount of rotating the platen in a case where the elapsed time exceeds a predetermined time is set in such a way that a moving distance of the paper from the printing position is within a predetermined range.

14. The non-transitory storage medium according to claim 13, wherein
the predetermined range is a range where a leading edge of the paper is between the printing position and a cutting position by a cutter that cuts the paper.

15. The non-transitory storage medium according to claim 13, further causing the processor to implement:
storing, in a memory, rotation information indicating a rotation direction of the platen immediately before the platen stops; and
rotating the platen in a direction opposite to a rotation direction immediately before stop indicated by rotation information stored in the memory in a case where the elapsed time exceeds the predetermined time.
